(19) Europäisches Patentamt
European Patent Office
Office européen des brevets

(11) Publication number: 0 251 282 B1

(12) # EUROPEAN PATENT SPECIFICATION

(45) Date of publication of patent specification: 17.04.91 (51) Int. Cl.$^5$: C09B 23/08, G03C 1/825

(21) Application number: 87109346.4

(22) Date of filing: 29.06.87

(54) **Novel infrared absorbing dyes and photographic elements containing same.**

(30) Priority: 02.07.86 US 881312
24.04.87 US 41954

(43) Date of publication of application:
07.01.88 Bulletin 88/01

(45) Publication of the grant of the patent:
17.04.91 Bulletin 91/16

(84) Designated Contracting States:
BE DE FR GB NL

(56) References cited:
EP-A- 0 287 100
EP-A- 0 288 083
GB-A- 2 089 055
JP-A-62 123 454
US-A- 3 671 648

(73) Proprietor: EASTMAN KODAK COMPANY (a New Jersey corporation)
343 State Street
Rochester New York 14650(US)

(72) Inventor: Proehl, Gary Stephen Eastman Kodak Company
Patent Department 343 State Street
Rochester New York 14650(US)
Inventor: Gingello, Anthony Dominic Eastman Kodak Company
Patent Department 343 State Street
Rochester New York 14650(US)
Inventor: Collett, David James Eastman Kodak Company
Patent Department 343 State Street
Rochester New York 14650(US)
Inventor: Stegman, David Alan Eastman Kodak Company
Patent Department 343 State Street
Rochester New York 14650(US)
Inventor: Parton, Richard Lee Eastman Kodak Company
Patent Department 343 State Street
Rochester New York 14650(US)

(74) Representative: Brandes, Jürgen, Dr.Rer.Nat. et al
Wuesthoff & Wuesthoff, Patent- und Rechtsanwälte, Schweigerstrasse 2
W-8000 München 90(DE)

EP 0 251 282 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to infrared absorbing dyes and photographic elements comprising a layer containing such dyes.

Photographic elements comprising light screening layers to reduce halation are known. Such layers are referred to in the photographic arts as antihalation layers. Antihalation layers may be located on either side of a transparent support carrying radiation sensitive layers, particularly silver halide emulsion layers. Moreover, such antihalation layers may be coated between two or more silver halide emulsions layers in a multilayer element or as a backing layer on the side of the support away from the light sensitive layers.

The development of information recording equipment using semiconductor laser diodes emitting in the infrared spectral region has required a parallel development of photographic elements, particularly silver halide photographic elements, with appropriate spectral sensitivity. Such elements also require antihalation absorbing layers in the infrared region.

Such antihalation layers should:

(1) provide antihalation protection in the region from 730 nm to 900 nm, depending on the emission wavelength of the laser diode (a common laser emission wavelength is 800 nm and other typical laser emission wavelengths are 750, 780, 820, and 870 nm),

(2) be water soluble at levels of at least 10 mg/ml so as to allow aqueous dissolution of the dye and provide compatibility with hydrophilic layers, and

(3) leave little or no stain in the processed film.

U.S. Patent 4,362,800 discloses 1,1,1' 1'-tetramethyl-3,3'-bis(sulfoalkyl)-IH-benz[e]indolo-tricarbocyanine sodium salt. This dye has been used with some success in antihalation layers. The problem is that, at the required coating levels, the dye leaves a greenish stain after processing. Such a stain is objectionable. GB 2 089 055 A discloses 1,1,1',1'-tetramethyl-3,3'-bis(carboxymethyl) IH-indolo-tricarbocyanine as compound no. 76 for use as a filter dye in an electrophotographic film. Post-processing stain is not a factor in such a film, but if this dye were to be used in a photographic material, it would likely leave objectionable stain. Thus, a nonstaining infrared absorbing dye for antihalation layers is needed.

The present invention provides infrared-absorbing dyes having the formula:

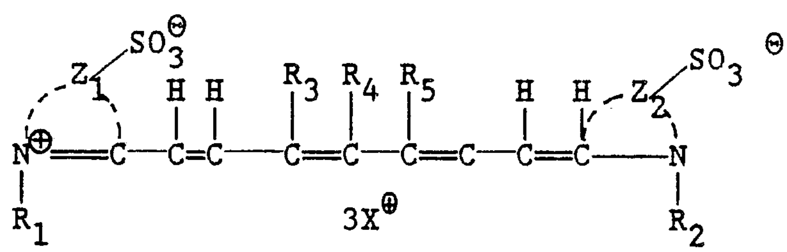

In this formula, $R_1$ and $R_2$ each independently represent optionally substituted: sulfoalkyl, carboxyalkyl, or sulfatoalkyl of from 3 to 6 carbon atoms, having at least 3 carbon atoms in the alkyl chain between the nitrogen atom of each Z ring and the sulfo or sulfato group, and at least 2 carbon atoms in the alkyl chain between the nitrogen atom of each Z ring and the carboxy group.

$R_3$ and $R_5$ are each hydrogen or together represent the atoms necessary to complete an optionally substituted 5- or 6-membered carbocyclic ring, and $R_4$ represents hydrogen, optionally substituted alkyl of 1 to 4 carbon atoms, optionally substituted aryl, cyano, halogen, or

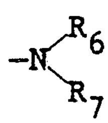,

where $R_6$ and $R_7$ each independently represents optionally substituted alkyl of from 1 to 6 carbon atoms or optionally substituted aryl, or together represent the necessary to form an optionally substituted 5- or 6-membered heterocyclic ring.

$x^{\oplus}$ represents a cation.

$Z_1$ and $Z_2$ each independently represent the atoms needed to complete an optionally substituted: indole, naphthindole or benzindole nucleus

Such dyes can be used in conjunction with a deaggregating compound to form effective filter dye

compositions in infrared-sensitive photographic elements, without leaving an objectionable post-processing stain.

Dyes of the invention are those of formula (I). With such dyes according to formula (I), $R_1$ and $R_2$ each independently represent sulfoalkyl, carboxyalkyl, or sulfatoalkyl of from 3 to 6 carbon atoms. Additionally, substituted sulfoalkyl, carboxyalkyl, and sulfatoalkyl are useful as $R_1$ and $R_2$. Such groups may be substituted with substituents such as methyl, hydroxy, and halogen such as Cl or F. Examples of $R_1$ and $R_2$ include 3-sulfopropyl, 3-sulfobutyl, 4-sulfobutyl, 3-sulfatopropyl, 3-carboxypropyl, and 2-hydroxy-3-sulfopropyl.

$R_3$ and $R_5$ each independently represent hydrogen or together represent the atoms necessary to complete a 5- or 6-membered carbocyclic ring, such as cyclopentenyl or cyclohexenyl. Substituted carbocyclic rings (substituted with, for example, alkyl, halogen, or hydroxy) are also useful as $R_3$ and $R_5$ - (e.g., 5-hydroxycyclohexenyl or 5,5'-dimethyl-cyclohexenyl).

$R_4$ represents hydrogen, alkyl of from 1 to 5 carbon atoms, such as methyl, ethyl, or propyl, cyano, halogen (e.g., F, Cl, I), or

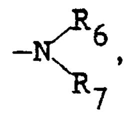

where $R_6$ and $R_7$ each individually represent alkyl of from 1 to 6 carbon atoms (e.g., methyl, ethyl, propyl), aryl (e.g., phenyl, p-methoxyphenyl), or together represent the atoms necessary to complete a 5- or 6-membered heterocyclic ring. Examples of such heterocyclic ring groups include morpholino, thiomorpholino, and piperazino, such as 4-ethoxycarbonyl-1-piperazino and 4-methyl-1-piperazino. Additionally, substituted alkyl, aryl, or heterocyclic rings are useful as $R_6$ and $R_7$. Useful substituents include hydroxy, alkoxy, and halogen, and useful substituted groups include 4-methoxyphenyl, hydroxyethyl, methoxyethyl, and 4-chlorophenyl.

It is contemplated herein that indole, naphthindole, or benzindole nuclei that are substituted with substituents such as halogen (e.g., Cl, F), hydroxy, alkoxy (e.g., methoxy), or aryl (e.g., phenyl, 4-methoxyphenyl) are also useful as $Z_1$ and $Z_2$ according to the present invention.

A preferred class of dye compounds according to formula (I) are represented by formula:

(II)

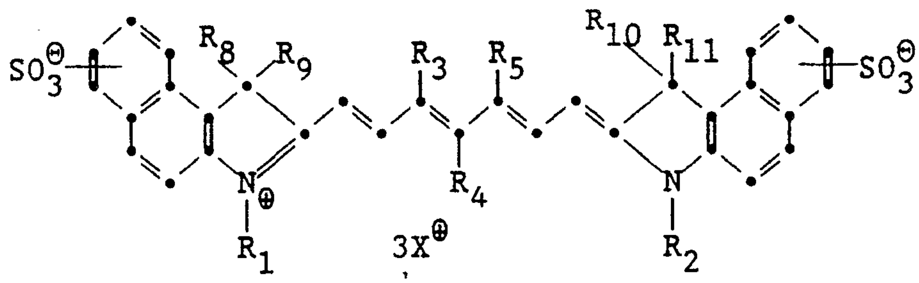

where $X^{\oplus}$, $R_1$, $R_2$, $R_3$, $R_4$, and $R_5$, are as defined above,

$R_8$, $R_9$, $R_{10}$ and $R_{11}$ each independently represent methyl or ethyl, or $R_8$ and $R_9$ or $R_{10}$ and $R_{11}$, taken together with the carbon atoms to which they are attached, may form a cycloalkyl group.

The dyes of this invention can be made according to the procedures of U.S. Patents 2,895,955, 3,148,187, and 3,423,207. Such a preparation procedure is illustrated in Example 1 infra .

Examples of such dyes include

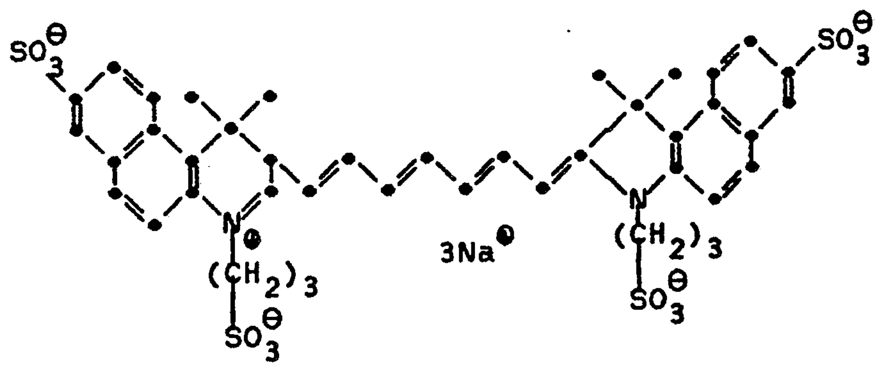

and

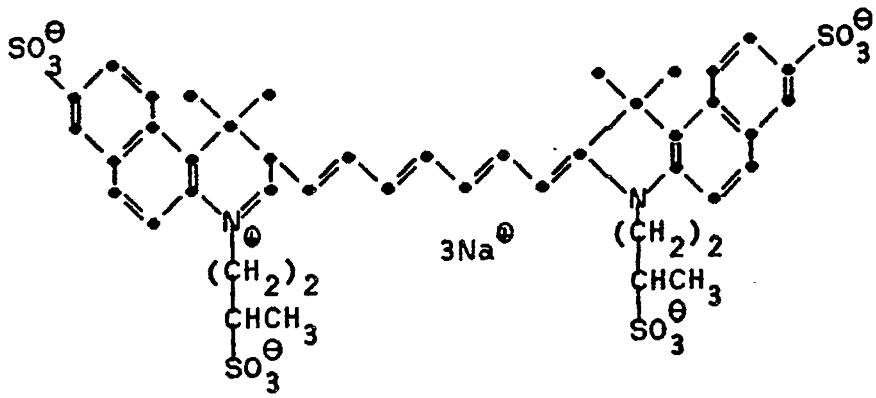

A deaggregating compound, or deaggregant, is often useful to enable the dyes of the invention to have the desired absorption maximum wavelength. These dyes have an absorbance maximum in the desired wavelength range in molecular form, but aggregate to cause a shift in the maximum absorbance wavelength. This can easily be determined by simply measuring the absorbance maximum with and without a deaggregant. Further information on aggregation is disclosed in James, *The Theory of the Photographic Process* , 4th, 218-22 (1977).

The amount of deaggregant needed to effectively deaggregate a dye of the invention in a hydrophillic colloid layer will vary according to the particular dye of the invention and the particular deaggregant selected, as shown in Example 5 and Table IV *infra* . However, one skilled in the art can easily establish the effective level of deaggregant by obtaining a *series* of spectrophotometric curves showing the effect of varying concentrations of the selected deaggregant on the absorption behavior of the dye. The point at which the concentration level of the deaggregant produces the desired absorption maximum will be the optimum amount of deaggregant.

Any of a number of well-known deaggregating compounds will be useful in combination with the dyes of the invention. Table I presents a list of useful deaggregating compounds.

TABLE I

Deaggregating Compounds

| Deaggregant No. | Name |
|---|---|
| 1 | 4,4'-Bis[4,6-bis(2-chloroanilino-s-triazin-2-yl)-amino]-2,2'-stilbene-disulfonic acid, disodium salt |
| 2 | Bis[3-methyl-1-(4-sulfophenyl)-2-pyrazolin-5-one-(4)]methineoxonol |
| 3 | Bis[3-methyl-1-(4-sulfophenyl)-2-pyrazolin-5-one-(4)]pentamethineoxonol |
| 4 | Bis[3-carboxy-1-(4-sulfophenyl)-2-pyrazolin-5-one(4)]trimethineoxonol disodium salt |
| 5 | Bis[1-butyl-3-carboxymethylbarbituric acid(5)]trimethineoxonol |

Other useful deaggregants include urea, 4-hydroxy-6-methyl-1,3,3a,7-tetraazaindene, surfactants, e.g, p-octylphenyl-$(OCH_2CH_2)_{34}OH$, $C_{12}H_{25}OSO_3Na$, phenol and substituted phenols, p-dioxane, octylphenoxy polyethoxyethanol, and various organic solvents. Additional specific deaggregants along with a discussion of the properties that make a compound useful as a deaggregant are disclosed by Herz, Photographic Science and Engineering, 18 , 323-35, May/June, 1974 and the above-identified James reference.

In a preferred embodiment, the dyes of the invention are in a hydrophilic colloid layer such as an antihalation layer of a photographic element at a concentration of from 0.01 to 0.10 $g/m^2$. The deaggregant is preferably present in an amount of from 25 to 10,000 weight percent, based on the weight of the dye.

The antihalation layers are prepared by coating on the photographic element or on its support, by methods well known in the art, a water solution of the dye, the deaggregant, a hydrophilic colloid binder and a coating aid such as saponin.

A dye of the invention and the selected deaggregant may be usefully added to the emulsion layer or any other layer of the photographic element.

For many purposes, it is desirable to add agents to harden the colloidal binder material so that the antihalation layer remains intact in the photographic element during and following the processing operation. The pH of the coating solution is adjusted when necessary by the usual methods to a level that is compatible with the light-sensitive emulsion layer.

The proportions of dye, deaggregant, water-permeable hydrophilic colloid binder, hardener, and coating aid used in making useful antihalation layers may be varied over wide ranges and will depend upon the specific requirements of the photographic element being produced. The method used to determine the optimum composition is well known in the art and need not be described here.

The antihalation layers may be coated on any suitable support material used in photography such as polyethylene terephthalate, cellulose nitrate, cellulose acetate, papers, etc.

Hydrophilic colloidal materials used as binders include gelatin, gelatin substitutes, collodion, gum arabic, cellulose ester derivatives such as alkyl esters of carboxylated cellulose, hydroxy ethyl cellulose, carboxy methyl hydroxy ethyl cellulose, synthetic resins, such as the amphoteric copolymers described in U.S. Patent 2,949,442, polyvinyl alcohol, and others well known in the art.

Examples of polymeric gelatin substitutes are copolymers of allylamine and methacrylic acid, copolymers of allylamine, acrylic acid and acrylamide, hydrolyzed copolymers of allylamine, methacrylic

acid and vinyl acetate, the copolymers of allylamine, acrylic acid and styrene, the copolymers of allylamine, methacrylic acid and acrylonitrile, etc.

The dye and the deaggregant are generally added to the water-permeable colloidal binder in water or methanol solution. Usually a coating aid, such as saponin, is added to the dyed colloidal suspension before coating it as a layer on the photographic element.

The photographic elements utilizing our antihalation layers have infrared light-sensitive emulsion layers. Such layers may contain silver chloride, silver bromide, silver chlorobromide, silver iodide, silver bromoiodide, silver chlorobromoiodide, etc., as the light-sensitive material. Indeed, any infrared absorbing light-sensitive silver halide emulsion layer may be used in these photographic elements. The silver halide emulsion are sensitized for infrared absorption by any of the sensitizers commonly used to produce the desired sensitometric characteristics.

Methods of making such elements, the means for sensitizing them to infrared radiation and the incorporation of antihalation layers comprising the dyes of this invention are well known and need not be described herein. Detailed teachings in this regard can be obtained from Research Disclosure, 1978, Item 17643 entitled "Photographic Silver Halide Emulsions, Preparations, Addenda, Processing and Systems."

The practice of the invention is further illustrated by the following examples. The structures of the dyes of the Examples are given in the Tables II and III.

# T A B L E II

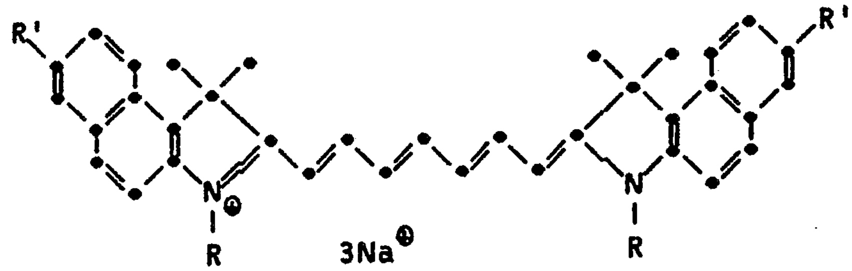

| Dye No. | R | R' |
|---|---|---|
| 1 | $-(CH_2)_3SO_3^{\ominus}$ | $-SO_3^{\ominus}$ |
| 2 | $-(CH_2)_2\underset{CH_3}{\underset{\vert}{C}}HSO_3^{\ominus}$ | $-SO_3^{\ominus}$ |
| 6 (Comparison) | $-(CH_2)_3SO_3^{\ominus}$ | H |
| 7 (Comparison) | $-(CH_2)_4SO_3^{\ominus}$ | H |
| 8 (Comparison) | $-(CH_2)_2\underset{CH_3}{\underset{\vert}{C}}HSO_3^{\ominus}$ | H |

# T A B L E III

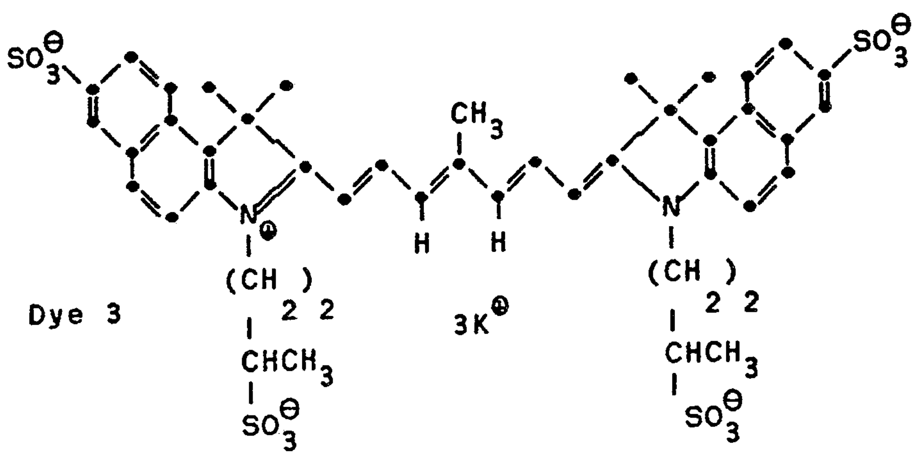

Dye 3

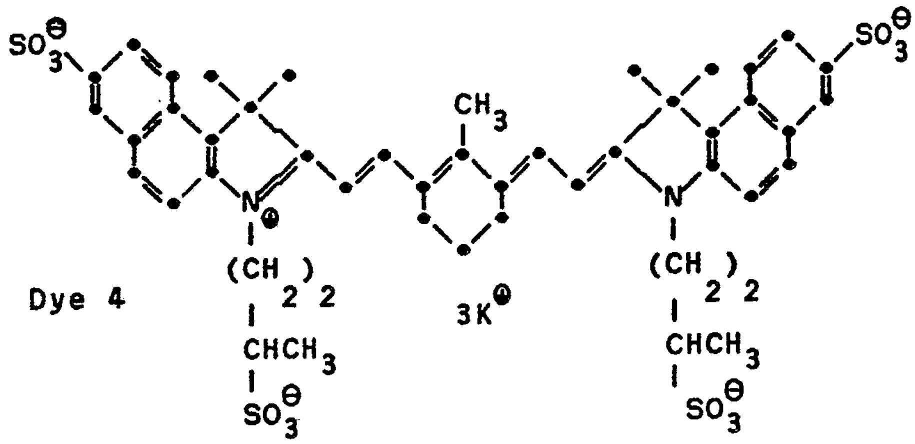

Dye 4

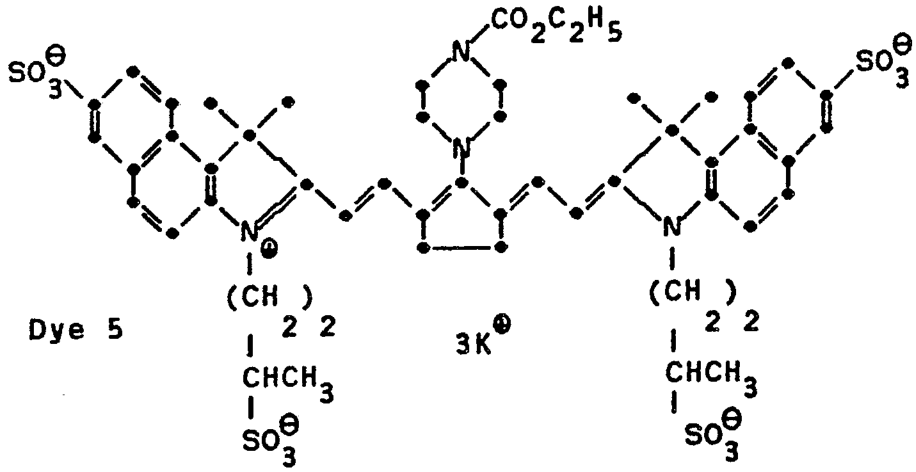

Dye 5

Example 1 : Preparation of Dye 2 of Table II

Step A - Preparation of 7-Sulfo-1,1,2-trimethyl-1H-benz[e]indole (Intermediate A)

1,1,2-Trimethyl-1H-benz[8]indole, 100 g. was added with stirring to 500 mL of concentrated $H_2SO_4$. The mixture was heated at 180° C for 1/2 h, cooled to 60° C and poured onto 2 Kg ice. Cautiously 500 ml of 50% aqueous NaOH was added. After 24 hours at room temperature the solid was filtered off, and 500 mL of saturated aqueous $Na_2SO_4$ was added. The resulting solid precipitate was collected, added to the previously filtered solid, and recrystallized from 2L of $H_2O$. Yield 25 g after overnight vacuum drying at 50° C. The location of the sulfo group was determined as being the 7-position by proton nuclear magnetic resonance measurements.

Step B - Preparation of Anhydro-7-sulfo-3-(3-sulfobutyl)-1,1,2-trimethyl-1H-benz[e]indolinium Hydroxide (Intermediate B)

A mixture of 28 g of 7-sulfo-1,1,2-trimethyl-1H-benz[e]indole (Intermediate A) and 40 g of 2,4-butanesultone was stirred and slowly heated to an internal temperature of 210° C over a period of 1.5 h. The reaction mass was held at 210° C for 20 minutes until a homogeneous brown liquid was obtained. After cooling to room temperature, the solidified mass was dissolved in 100 mL of boiling methanol. After cooling to room temperature, the solid that precipitated was collected by suction filtration. This solid was suspended in 500 mL of acetone with stirring. Filtration and drying at 0.5 mm Hg overnight gave 35 g (85%) of light gray solid. The infrared spectrum was in agreement with the expected structure.

Step C - Preparation of Anhydro-3,3′-di-(3-sulfobutyl)-7,7′-disulfo-1,1,1′,1′-tetramethylbenz[e]-indolotricarbocyanine Hydroxide Trisodium Salt (Dye 2 of Table II)

With good stirring, a suspension of 10.0 g of Intermediate B and 3.4 g of glutacondialdehydedianil hydrochloride was formed in 50 mL of acetonitrile. Four ml of triethylamine was added, followed by 4 mL of acetic anhydride. An additional 4 ml of triethylamine was added, and the mixture was then refluxed for 5 min. After cooling to room temperature in the dark, a solution of 5.5 g of sodium iodide dissolved in 10 mL of methanol was added. The precipitated solid was collected and washed with fresh acetonitrile. After drying at 0.5 mm Hg for 2 h, there remained 10.0 g (87%) of green powder, $\epsilon$ = 23.5 x $10^4$ at 784 nm in methanol.

Example 2 : Preparation of Dye 3 of Table III

2.0 g of intermediate B of Example 1 and 0.8 g 3-methylglutacondialdehyde dianil bromide were combined in 10 ml pyridine and 2 ml triethylamine and heated at reflux for 15 minutes. After cooling, the mixture was diluted with ether with stirring. The ether phase was decanted and the remaining product was dissolved in hot methanol and filtered. Excess potassium acetate was added to the filtrate and the resulting precipitate was collected and recrystallized from a 50/50 mixture of methanol and water to yield Dye 3 of Table III, $\lambda$-max = 806 nm in methanol/water, $\epsilon$-max = 24.79 X $10^4$.

Example 3 : Preparation of Dye 4 of Table III

8.5 g of intermediate B of Example 1 and 3.3 g 3-methyl-2,4-trimethyleneglutacondialdehydedianil were combined in 5 ml acetic anhydride and 100 ml pyridine and heated at reflux for 5 minutes. After cooling, the mixture was diluted with 500 ml of ether with stirring. The ether phase was decanted and the remaining product was dissolved in 50 ml of hot pyridine and water. Excess potassium acetate was added and the mixture was cooled to room temperature. The resulting precipitate was collected and dried to yield Dye 4 of Table III, $\lambda$-max = 806 nm in methanol/water, $\epsilon$-max = 26.82 X $10^4$.

Example 4 : Preparation of Dye 5 of Table III

2.1 g of intermediate B of Example 1 and 1.3 g 1-[2,5-bis(anilinomethylene)cyclopentylidene]-4-ethoxycarbonylpiperazinium tetrafluoroborate were combined in 5 ml triethylamine and 20 ml dimethylformamide and heated at reflux for 5 minutes. After cooling, the mixture was diluted with ether with stirring. The ether phase was decanted and the remaining product was dissolved in a 50/50 mixture of methanol and water. Excess potassium acetate dissolved in methanol was added and the resulting precipitate was recrystallized from a 50/50 mix of methanol and water to yield Dye 5 of Table III. $\lambda$-max = 738 nm (MeOH), $\epsilon$-max = 15.34 X $10^4$.

Example 5 :

This example illustrates: a) the desirable absorption but severe post processing stain problem of comparison dyes having structures similar to the dyes of this invention (comparison dyes 6, 7 and 8), b) aggregation with resulting poor absorption in the infrared region or severe stain, or both, of the dyes 1-5 of this invention when coated alone, c) the desired absorption and lower residual stain of dyes 1-5 of this invention when coated with deaggregants from Table I.

Coating compositions of the examples were prepared by adding the components, at predetermined levels based on the coverages desired in coated layers of the composition, to a hydrophillic material such as gelatin. In these examples the compositions were coated on a polyethylene terephthalate support to achieve gelatin coverage of 3.14 $g/m^2$ and component coverage as listed in Table IV. Absorption spectra were obtained using a spectrophotometer before and after processing.

Processing was by the rack and tank method with development for 30 s at 38 °C in Kodak Rapid Scanner Developer®, fixing at 38 °C. in Kodak Rapid Fixer® and washing for 60 s at about 32 °C. Total transmittance density measurements made before and after processing to indicate stain levels before and after processing. A visual evaluation was also made of the post-process stain. The results are listed in Table

IV. In correlating the visual evaluation of stain with observed spectral curves it should be noted that the eye is sensitive to about 750 nm.

Comparison Dyes 6, 7 and 8 of Table III show strong absorption in the spectral region of interest. However, they also show severe post-processing stain.

Dyes 1-4 of the invention, when coated alone show some absorption in the infrared region, but peak at higher wavelengths, indicating aggregation. The aggregated dyes also result in post-processing stain that ranges from very severe to moderate. However, as Deaggregants 1 or 2 are added, the peaks in the 800 nm region are enhanced, while the absorption at higher wavelengths greatly decreases, indicating deaggregation of the dyes of the invention. Dye 5 has an aggregate absorption in the region of interest, but also causes very severe post-processing stain when coated without a deaggregant. This stain is greatly reduced when a deaggregant is utilized.

In Table IV coatings 5, 7, 8, 10, 12, and 14 contain dye and deaggregant compositions of the invention. Coatings 1, 2 and 3 contain dyes 6, 7 and 8, respectively, identified in Table II as comparison dyes. Coatings 4-5 contain dye 1, alone or in combination with deaggregant 2, identified in Table I. Coatings 6-8 contain dye 2, alone and in combination with deaggregants 1 or 2. Coatings 9, 11 and 13 contain dyes 3, 4, and 5 of the invention coated without a deaggregant. Coatings 10 12, and 14 contain dyes 3, 4, and 5 of the invention coated with deaggregant 2 of Table I.

In Table IV, the stain evaluation, done visually, is recorded using the code VS = very severe, S = severe, M = moderate, SL = slight and BD = barely detectable. Other symbols include * which indicates that the dye in this coating had an aggregate peak beyond 900 nm. The optical density (OD) of the aggregate peak is much higher than the maximum in the table. λ-max is the peak with the highest OD in the 300 to 900 nm region λ-sec indicates a secondary maximum or, in most cases, a shoulder (labeled s) or slight curve inflection (labeled i).

T A B L E IV
Absorption Data

| Coating No. | Dye | Level g/m² | Add | Level mg/m² | Unprocessed λ-max | Unprocessed OD | Unprocessed λ-sec | Unprocessed OD | Processed λ-max | Processed OD | Processed λ-sec | Processed OD | Stain |
|---|---|---|---|---|---|---|---|---|---|---|---|---|---|
| 1 comp. | 6 | 0.029 | — | — | 732 | 0.495 | 800 | 0.320 | 732 | 0.380 | 800i | 0.252 | VS |
| 2 comp. | 7 | 0.022 | — | — | 802 | 0.390 | 740 | 0.270 | 802 | 0.177 | 740i | 0.125 | S |
| 3 comp. | 8 | 0.022 | — | — | 800 | 0.350 | 735 | 0.290 | 800 | 0.172 | 740s | 0.140 | S |
| 4 | 1 | 0.043 | — | — | 817* | 0.435 | 750i | 0.255 | 822* | 0.360 | 750i | 0.152 | VS |
| 5 | 1 | 0.043 | 2 | 2.150 | 807 | 0.760 | 740s | 0.280 | a | 0.065 | a | 0.055 | BD |
| 6 comp. | 2 | 0.043 | — | — | 805* | 0.350 | 750i | 0.210 | 815 | 0.092 | 730i | 0.057 | M |
| 7 | 2 | 0.043 | 2 | 1.080 | 802 | 0.750 | 735s | 0.285 | a | 0.052 | a | 0.045 | BD |
| 8 | 2 | 0.043 | 1 | 0.043 | 801 | 0.700 | 740s | 0.350 | 805 | 0.122 | 735s | 0.070 | SL |
| 9 comp. | 3 | 0.064 | — | — | 850* | 0.437 | — | — | 828* | 0.181 | — | — | M |
| 10 | 3 | 0.064 | 2 | 1.080 | 826 | 0.978 | 760s | 0.397 | 822 | 0.047 | 750s | 0.014 | SL |
| 11 comp. | 4 | 0.064 | — | — | 828* | 0.557 | 765i | 0.280 | 823 | 0.263 | 750s | 0.090 | M |
| 12 | 4 | 0.064 | 2 | 1.080 | 828 | 1.019 | 760s | 0.338 | 823 | 0.195 | 760s | 0.060 | M |
| 13 comp. | 5 | 0.064 | — | — | 815 | 1.081 | — | — | 816 | 1.117 | — | — | S |
| 14 | 5 | 0.064 | 2 | 1.080 | 766 | 0.574 | — | — | 826 | 0.400 | — | — | S |

comp. = comparison

The presence of a deaggregant is indicated by the column heading "Add" (for additive). The letter 'a' in place of a number indicates that the maximum was almost non-existent. For coating 7, the densities were read at 820 to 830 nm and at 740 to 750 nm, respectively. For coating 10, the densities were read at 800 to 820 nm and 730 to 750 nm, respectively.

The comparison dyes 6, 7 and 8 were not coated with deaggregants since in the coatings they were already in a deaggregated state. They show strong absorption in the spectral region of interest. However, they also show severe post-processing stain.

Example 6 :

This coating Example illustrates the deaggregation of Dye 2 of the invention when coated in the presence of Deaggregants 2, 3, 4 and 5 of Table II.

The coatings were prepared using a 12% solution of gelatin, containing Dye 2 at 1.7 x $10^{-5}$ molar concentration, and the deaggregants at molar concentrations listed in Table V. The coating melts were applied with a hand coater to polyester support at approximately 130 ml/$m^2$, and were hardened with formaldehyde at 1.39% of the gelatin weight.

After chill setting and drying, the absorption spectra were obtained with a spectrophotometer.

TABLE V

| Coating No. | Dye V Molarity | Deaggregant | Molarity |
|---|---|---|---|
| 1 | 1.7 x $10^{-4}$ | — | — |
| 2 | 1.7 x $10^{-4}$ | 2 | 3.9 x $10^{-4}$ |
| 3 | 1.7 x $10^{-4}$ | 3 | 2.9 x $10^{-4}$ |
| 4 | 1.7 x $10^{-4}$ | 4 | 4.4 x $10^{-4}$ |
| 5 | 1.7 x $10^{-4}$ | 5 | 2.0 x $10^{-4}$ |

Only a small absorption peak at about 800 nm was observed for Dye 2 when coated alone. The major absorption was at wavelengths greater than 900 nm. Enhancement of the 800 nm absorption peak to varying degrees was observed with Deaggregants 2, 3, 4 and 5, indicating that each of these compounds has a deaggregating effect on Dye 2 of the invention.

Thus, particularly effective antihalation layers can be formed with a combination of a dye of the invention and a deaggregant.

## Claims

1. A photographic element comprising a support having thereon a hydrophilic colloid layer infrared filter dye, either in the silver halide layer or another hydrophilic colloid layer, characterized in that the dye has the formula:

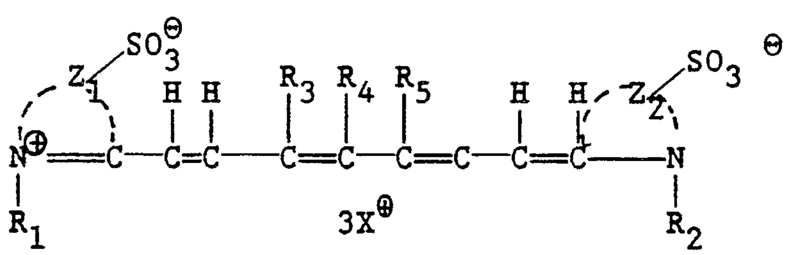

$R_1$ and $R_2$ each independently represents optionally substituted: sulfoalkyl, carboxyalkyl, or sulfatoalkyl containing from 3 to 6 carbon atoms, having at least 3 carbon atoms in the alkyl chain between the nitrogen atom of each Z ring and the sulfo or sulfato group, and at least 2 carbon atoms in the alkyl chain between the nitrogen atom of each Z ring and the carboxy group,

$R_3$ and $R_5$ are each hydrogen or together represent the atoms necessary to complete an optionally substituted 5- or 6-membered carbocyclic ring,

$R_4$ represents hydrogen, optionally substituted alkyl of 1 to 4 carbon atoms, optionally substituted aryl, cyano, halogen, or

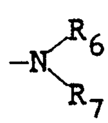,

where $R_6$ and $R_7$ each independently represents optionally substituted alkyl of from 1 to 6 carbon atoms or optionally substituted aryl, or together represent the atoms necessary to form an optionally substituted 5- or 6-membered heterocyclic ring,

$X^{\oplus}$ represents a cation, and

$Z_1$ and $Z_2$ each independently represent the atoms needed to complete an optionally substituted: indole, naphthindole or benzindole nucleus.

2. A photographic element according to Claim 1 wherein the dye has the structure:

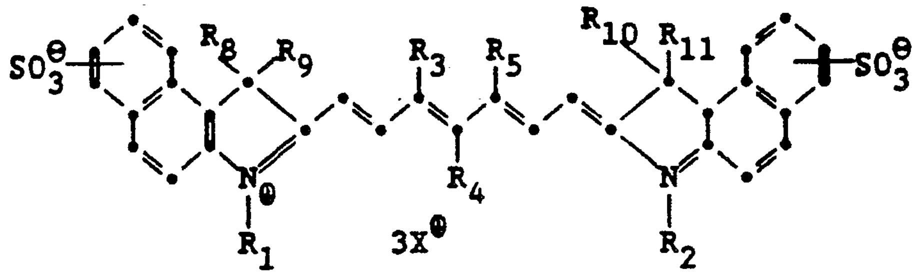

.

wherein $X^+$, $R_1$, $R_2$, $R_3$, $R_4$, and $R_5$, are as defined in Claim 1,

$R_8$, $R_9$, $R_{10}$ and $R_{11}$ each independently represent methyl or ethyl, or

$R_8$ and $R_9$ or $R_{10}$ and $R_{11}$, taken together with the carbon atoms to which that are attached, may form a cycloalkyl group.

3. A photographic element according to Claims 1-2 wherein the filter dye layer also comprises a deaggregant compound.

4. A dye composition according to Claim 1-3 wherein said filter dye is selected from the group consisting of

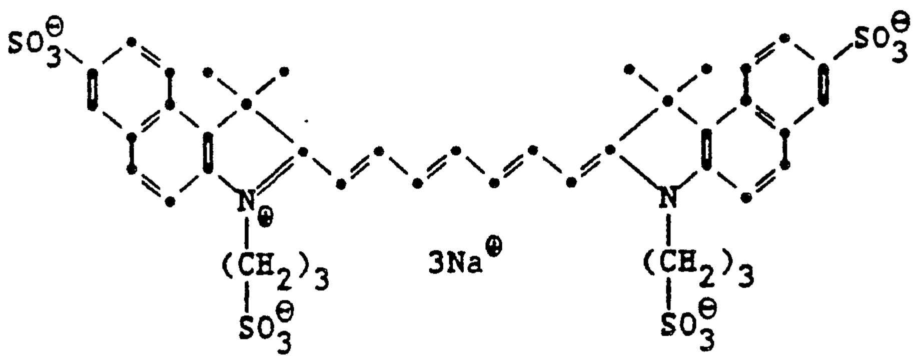

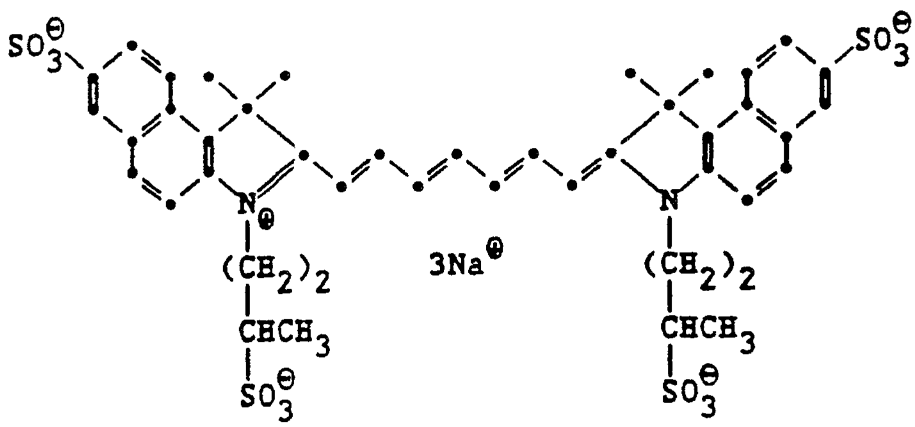

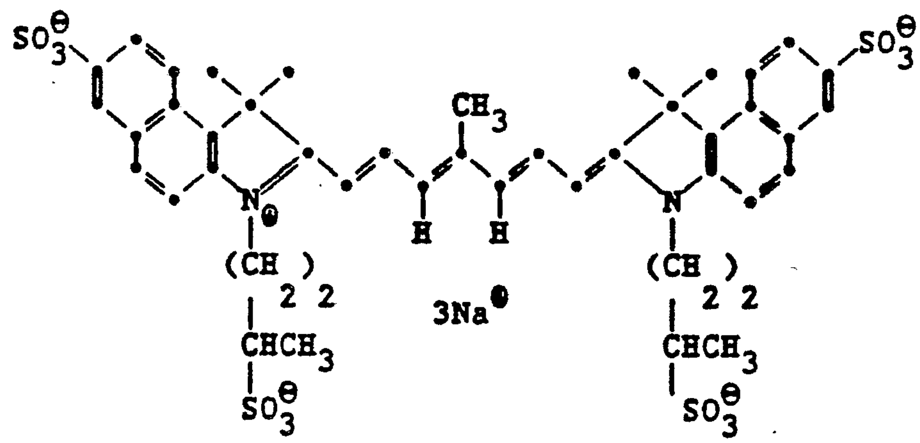

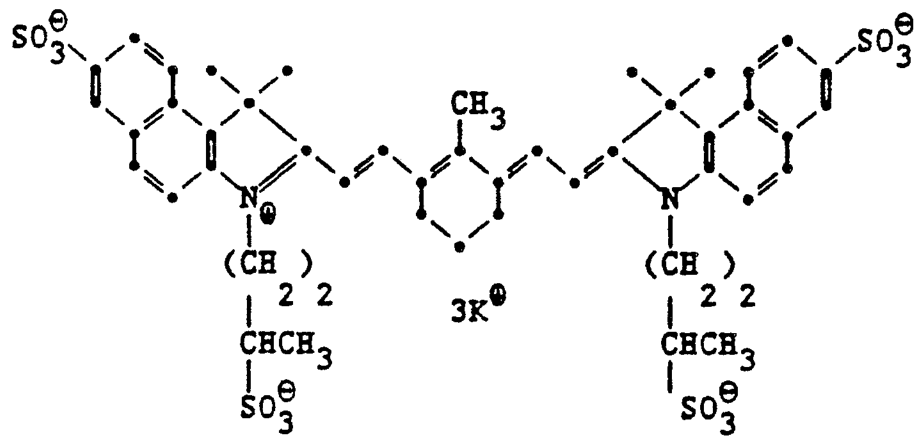

and

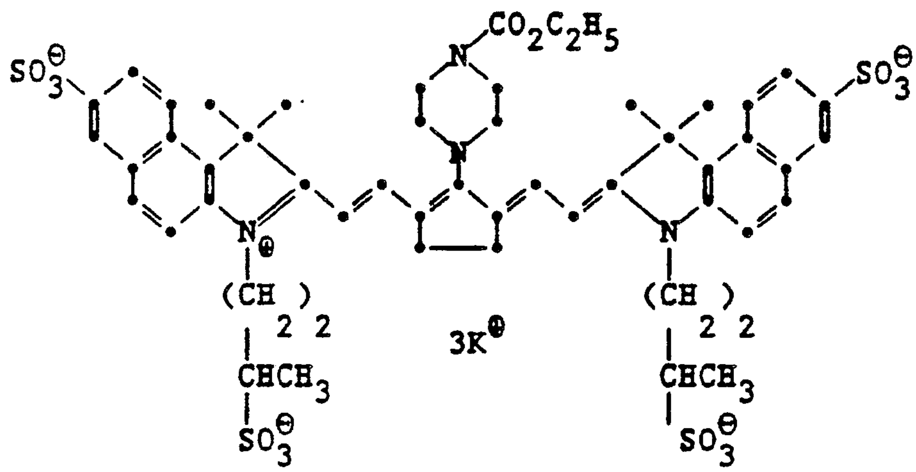

5. A photographic element according to Claim 3 wherein the hydrophilic colloid filter dye layer comprises from 25 to 10,000 weight percent of the deaggregant, based on the weight of said filter dye, and the deaggregant is selected from the group consisting of:
4,4'-Bis[4,6-bis(2-chloroanilino-s -triazin-2-yl)-aminol-2,2'-stilbenedisulfonic acid, disodium salt,
bis[3-methyl-1-(p -sulfophenyl)-2-pyrazolin-5-one-(4)]methineoxonol,
bis[3-methyl-1-(p -sulfophenyl)-2-pyrazolin-5-one-(4)]pentamethineoxonol,
bis [3-carboxy-1-(p -sulfophenyl)-2-pyrazolin-5-one-(4)]trimethineoxonol disodium salt, and
bis(1-butyl-3-carboxymethyl-5-barbituric acid)trimethineoxonol.

6. A photographic element according to Claims 1-5 wherein said hydrophilic colloid layer comprises from 0.01 to 0.10 g/m$^2$ of said filter dye.

7. A photographic element according to Claims 1-6 wherein said hydrophilic colloid filter dye layer is an antihalation layer.

## Revendications

1. Produit photographique comprenant un support avec, sur ce support, une couche de colloïde hydrophile comprenant un halogènure d'argent sensible à l'infra-rouge et un colorant filtrant l'infra-rouge soit dans la couche aux halogènures d'argent, soit dans une autre couche de colloïde hydrophile, caractérisé en ce que le colorant a la formule:

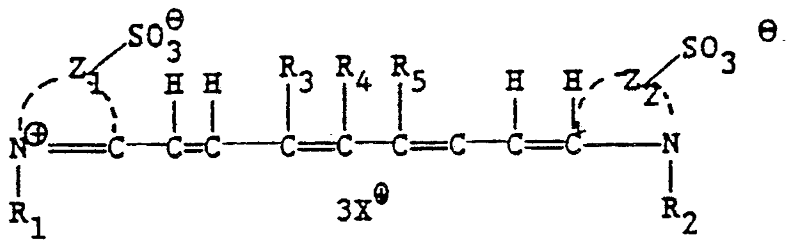

$R^1$ et $R^2$ représentent chacun indépendamment les groupes suivants éventuellement substitués: sulfoalkyle, carboxyalkyle ou sulfatoalkyle contenant de 3 à 6 atomes de carbone avec au moins 3 atomes de carbone dans la chaine alkyle entre l'atome d'azote de chaque cycle Z et le groupe sulfo ou sulfato et au moins 2 atomes de carbone dans la chaine alkyle entre l'atome d'azote de chaque cycle Z et le groupe carboxy, $R^3$ et $R^5$ représentent chacun l'hydrogène ou représentent ensemble les atomes nécessaires pour compléter un carbocycle à 5 ou 6 atomes éventuellement substitué,
$R^4$ représente l'hydrogène, un groupe alkyle éventuellement substitué de 1 à 4 atomes de carbone, un groupe aryle éventuellement substitué, cyano, halogène ou

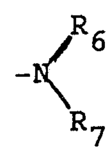

où $R^6$ et $R^7$ représentent chacun indépendamment un radical alkyle éventuellement substitué, de 1 à 6 atomes de carbone, un groupe aryle éventuellement substitué, ou représentent ensemble les atomes nécessaires pour former un hétérocycle à 5 ou 6 atomes éventuellement substitué,
$X^+$ représente un cation, et
$Z^1$ et $Z^2$ représentent chacun indépendamment les atomes nécessaires pour compléter l'un des radicaux suivants éventuellement substitué: indole, naphthindole, ou benzindole.

2. Produit photographique selon la revendication 1, dans lequel le colorant a la structure:

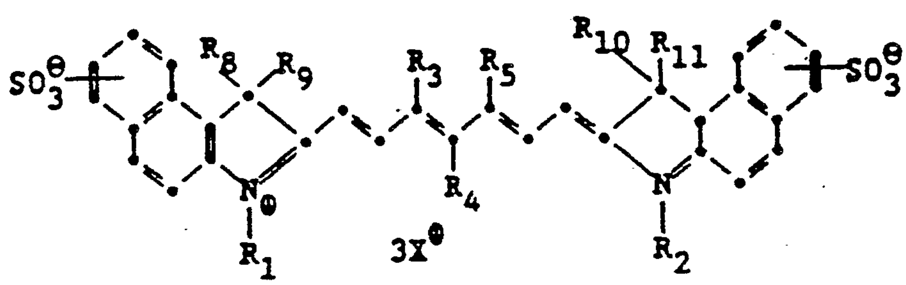

où $x^+$, $R_1$, $R_2$, $R_3$, $R_4$ et $R_5$ sont tels que définis à la revendication 1,
$R_8$ $R_9$, $R_{10}$ et $R_{11}$, représentent chacun indépendamment méthyle ou éthyle, ou
$R_8$ et $R_9$, ou $R_{10}$ et $R_{11}$, ensemble, avec les atomes de carbone auxquels ils sont attachés, peuvent former un groupe cycloalkyle.

3. Produit photographique selon les revendications 1-2, dans lequel la couche de colorant filtre contient un composé anti-agrégat.

4. Composition de colorant selon les revendications 1-3, dans laquelle le colorant filtre est choisi dans le groupe constitué par

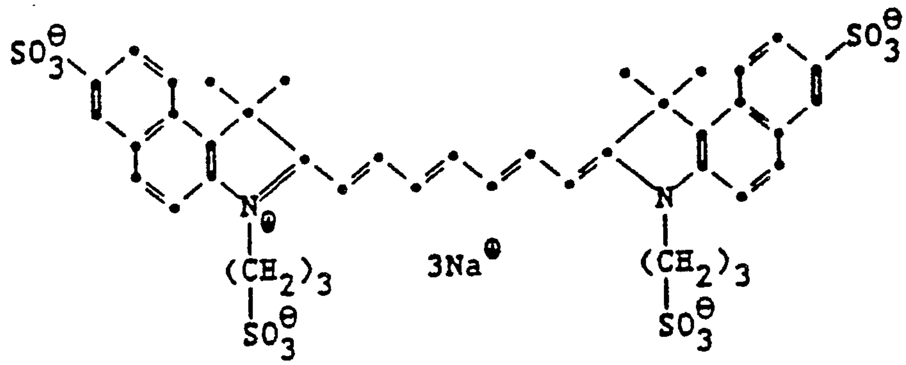

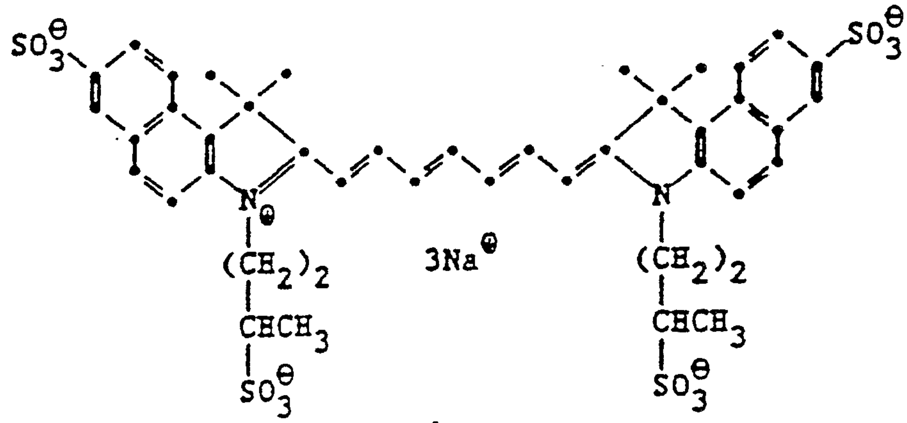

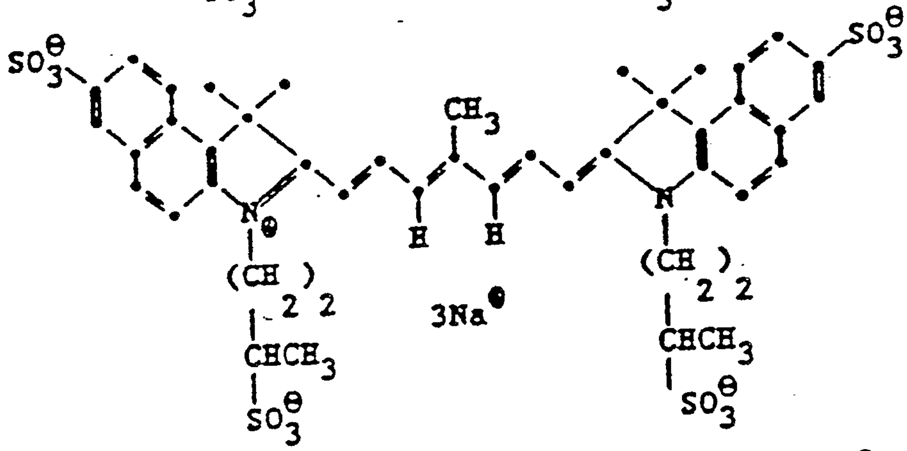

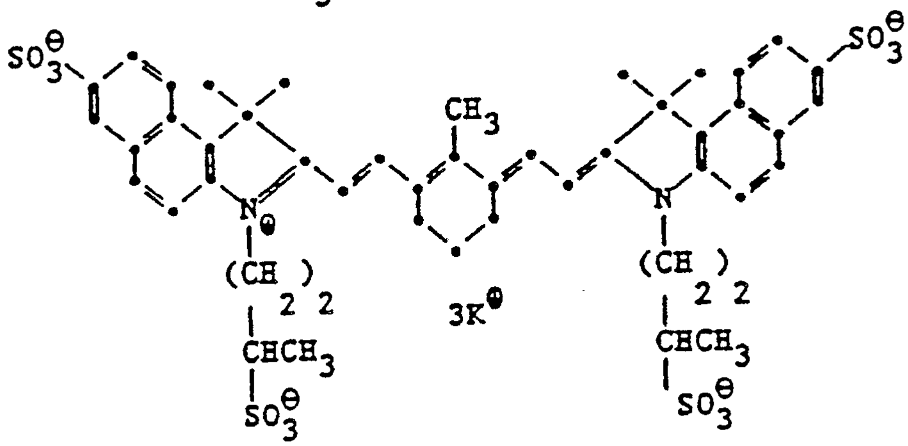

et

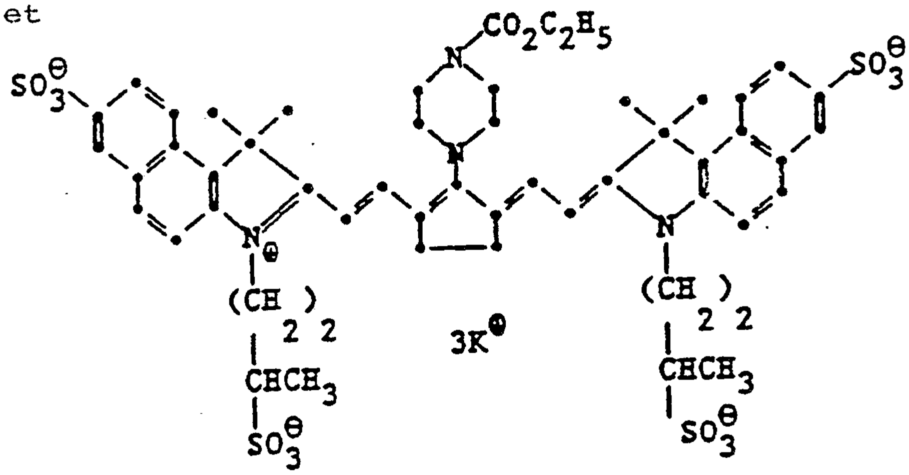

5. produit photographique selon la revendication 3, dans lequel la couche de colloïde hydrophile avec colorant filtre comprend de 25 à 10 000% en masse du composant anti-agrégat, par rapport à la masse du colorant filtre, le composé anti-agrégat étant choisi dans le groupe constitué par:
Acide 4,4'-Bis[4,6-bis(2-chloroanilino-s -triazin-2-yl)-amino]-2,2'-stilbenedisulfonique, sel disodique
bis[3-methyl-1-(p-sulfophenyl)-2-pyrazolin-5-one-(4)] methineoxonol,
bis[3-methyl-1-(p-sulfophenyl)-2-pyrazolin-5-one-(4)] pentamethineoxonol,
bis[3-carboxy-1-(p-sulfophenyl)-2-pyrazolin-5-one-(4)] trimethineoxonol, sel disodique, et
bis(acide 1-butyl-3-carboxymethyl-5-barbiturique) trimethineoxonol.

6. Produit photographique selon les revendications 1-5, dans lequel la couche de colloïde hydrophile contient de 0,01 à 0,10 $g/m^2$ du colorant filtre.

7. Produit photographique selon les revendications 1-6, dans lequel la couche de colloïde hydrophile avec colorant filtre est une couche anti-halo.

## Ansprüche

1. Photographisches Element mit einem Träger, auf dem sich eine hydrophile Kolloidschicht mit infrarotempfindlichem Silberhalogenid befindet sowie mit einem Infrarotfilterfarbstoff in der silberhalogenidschicht oder einer anderen hydrophilen Kolloidschicht, dadurch gekennzeichnet, daß der Farbstoff der folgenden Formel entspricht:

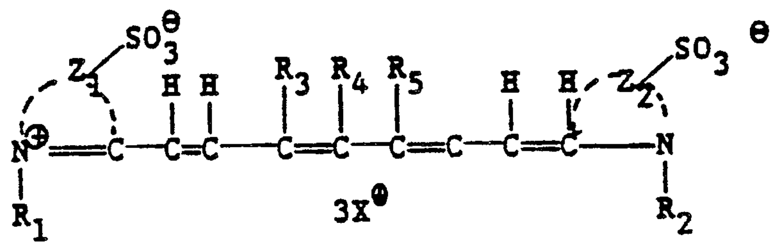

in der bedeuten:

$R_1$ und $R_2$ jeweils unabhängig voneinander ein Sulfoalkyl, Carboxyalkyl oder Sulfatoalkyl mit 3 bis 6 Kohlenstoffatomen mit mindestens 3 Kohlenstoffatomen in der Alkylkette zwischen dem Stickstoffatom von jedem Z-Ring und der Sulfo- oder Sulfatogruppe und mindestens zwei Kohlenstoffatomen in der Alkylkette zwischen dem Stickstoffatom von jedem Z-Ring und der Carboxygruppe,

$R_3$ und $R_5$ jeweils Wasserstoff oder gemeinsam die zur Vervollständigung eines gegebenenfalls substituierten 5- oder 6-gliedrigen carbocyclischen Ringes erforderlichen Atome,

$R_4$ Wasserstoff, gegebenenfalls substituiertes Alkyl mit 1 bis 4 Kohlenstoffatomen, gegebenenfalls substituiertes Aryl, Cyano, Halogen oder

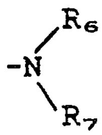

,

worin $R_6$ und $R_7$ jeweils unabhängig voneinander darstellen: gegebenenfalls substituiertes Alkyl mit 1 bis 6 Kohlenstoffatomen oder gegebenenfalls substituiertes Aryl oder gemeinsam die Atome, die zur Bildung eines gegebenenfalls substituierten 5- oder 6-gliedrigen heterocyclischen Ringes erforderlich sind,

$X^{\oplus}$ ein Kation und

$Z_1$ und $Z_2$ jeweils unabhängig voneinander die Atome, die zur Vervollständigung eines gegebenenfalls substituierten Indol-, Naphthindol- oder Benzindolkernes erforderlich sind.

2. Photographisches Element nach Anspruch 1, in dem der Farbstoff der folgenden Struktur entspricht:

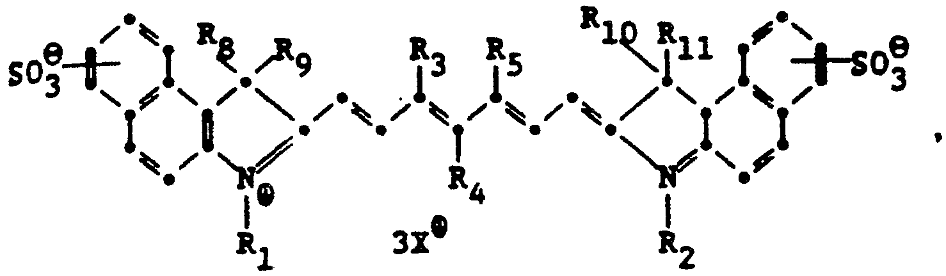

in der $X^{\ominus}$, $R_1$, $R_2$, $R_3$, $R_4$ und $R_5$ die in Anspruch 1 angegebene Bedeutung haben und $R_8$, $R_9$, $R_{10}$ und $R_{11}$, gemeinsam mit den Kohlenstoffatomen, an die sie gebunden sind, eine Cycloalkylgruppe bedeuten.

3. Photographisches Element nch Ansprüchen 1-2, in dem die Filterfarbstoffschicht ein Deaggregationsmittel enthält.

4. Farbstoffzusammensetzung nach Ansprüchen 1-3, in der der Filterfarbstoff ausgewählt ist aus der Gruppe bestehend aus:

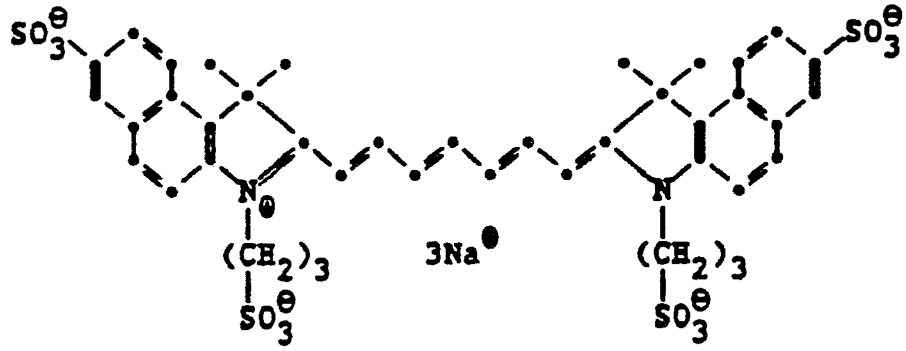

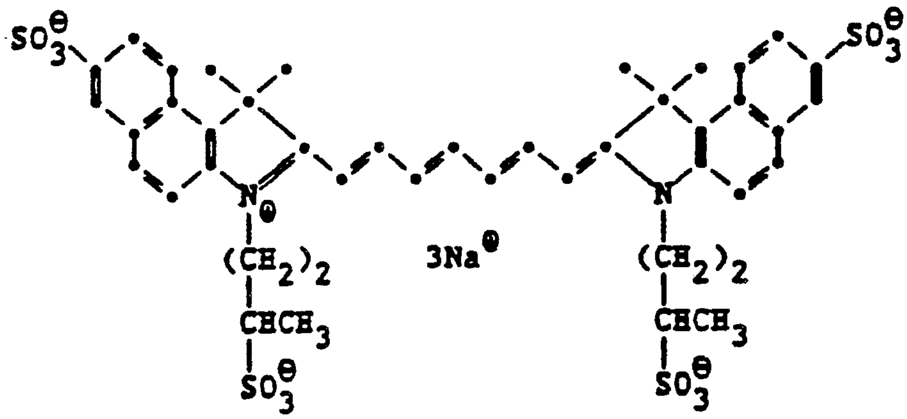

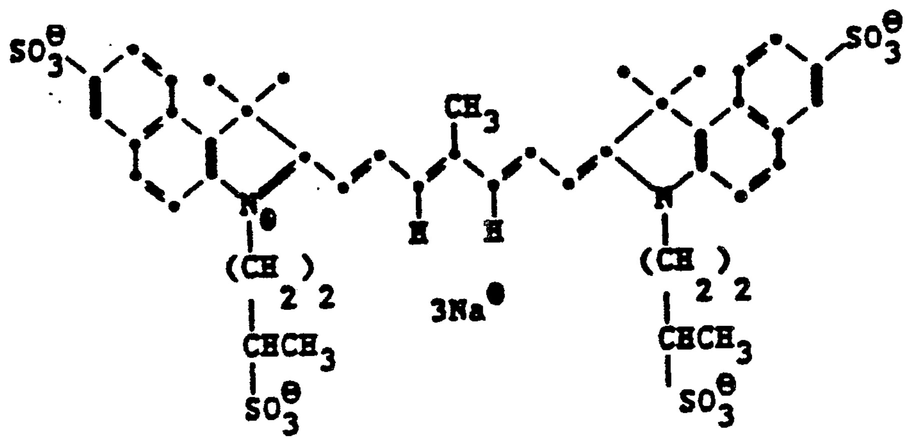

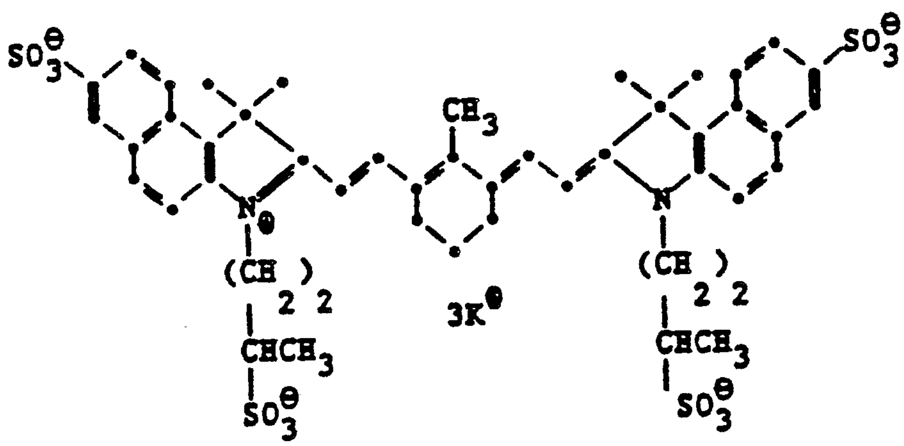

und

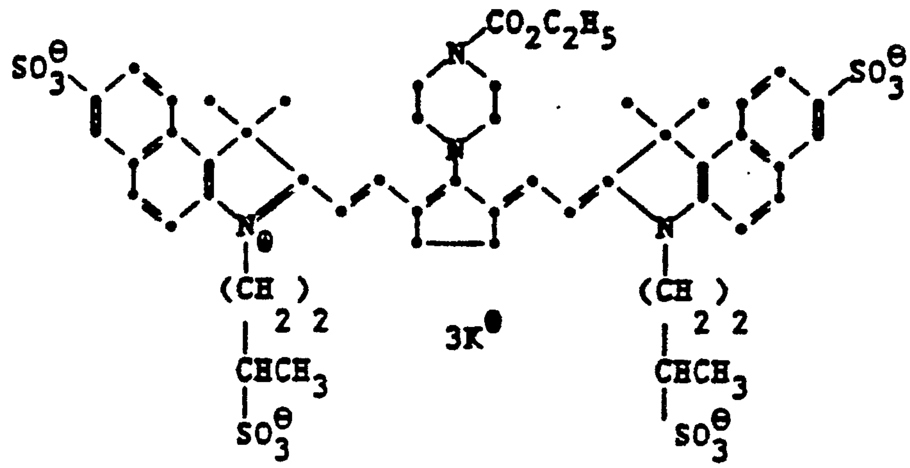

5. Photographisches Element nach Anspruch 3, in dem die hydrophile Kolloid-Filterfarbstoffschicht 25 bis 10 000 Gewichtsprozent Deaggregationsmittel, bezogen auf das Gewicht des Filterfarbstoffes, enthält, und das Deaggregationsmittel ausgewählt ist aus der Gruppe bestehend aus:
   4,4'-Bis[4,6-bis(2-chloroanilino-s -triazin-2yl-)amino]-2,2'-stilbenedisulfonsäure, Dinatriumsalz,
   Bis[3-methyl-1-[p-sulfophenyl)-2-pyrazolin-5on-(4)]-methinoxonol,
   Bis[3-methyl-1-(p -sulfophenyl)-2-pyrazolin-5-on(4)]-pentamethinoxonol,
   Bis[3-carboxy-1-[p -sulfophenyl)-2-pyrazolin-5-on-(4)-]-trimethinoxonol, Dinatriumsalz und
   Bis(1-butyl-3-carboxy-methyl-5-barbitursäure)trimethinoxonol.

6. Photographisches Element nach Ansprüchen 1-5, in dem die hydrophile Kolloidschicht 0,01 bis 0,10 g/m$^2$ des Filterfarbstoffes enthält.

7. Photographisches Element nach Ansprüchen 1-6, in dem die hydrophile Kolloid-Filterfarbstoffschicht eine Lichthofschutzschicht ist.